# EUROPEAN PATENT APPLICATION

(11) **EP 2 278 820 A2**
(43) Date of publication of application: **26.01.2011**
(21) Application number: 10251205.0
(22) Date of filing: 05.07.2010
(51) Int. Cl.: H04N 13/00, G06T 7/00, H04N 5/77

(54) **Stereoscopic image recording apparatus and method, stereoscopic image outputting apparatus and method, and stereoscopic image recording outputting system**

(30) Priority: 17.07.2009 JP 2009169293
(71) Applicant: FUJIFILM Corporation, Tokyo (JP)
(72) Inventor: Watanabe, Mikio, Kurokawa-gun Miyagi (JP); Nakamura, Satoshi, Kurokawa-gun Miyagi (JP); Kanamori, Shino, Kurokawa-gun Miyagi (JP)
(74) Representative: Stevens, Jason Paul

(57) **Abstract**

A digital camera has two imaging units for capturing a pair of parallax images of an identical subject from different viewpoints for use in displaying a stereoscopic image. Parallax amounts between respective corresponding points of these parallax images are detected to calculate a cumulative frequency of the parallax amounts. Based on the cumulative frequency, adequacy of these parallax images for stereoscopic display is evaluated, and these images are recorded in association with information on the evaluated adequacy. Before displaying a stereoscopic image using the parallax images, a digital photo frame refers to the information on the stereoscopic adequacy of these images, and changes its output condition depending on the stereoscopic adequacy.

## Description

### FIELD OF THE INVENTION

The present invention relates to an apparatus and a method, wherein a plurality of images of an identical subject are captured from different viewpoints in order to produce a stereoscopic image of the subject. More specifically, the present invention relates to a stereoscopic image recording apparatus for recording a plurality of images of an identical subject which are simultaneously captured from different viewpoints, and a method therefor, as well as a stereoscopic image outputting apparatus for outputting a stereoscopic image based on the multiple images of the identical subject recorded by the stereoscopic image recording apparatus, and a method therefor. The present invention relates also to a stereoscopic image recording outputting system for recording such multiple images to output a stereoscopic image based on the recorded multiple images.

### BACKGROUND OF THE INVENTION

An imaging system called 3D (three-dimensional) digital picture system has been known, which includes a binocular digital camera that captures a subject simultaneously from different viewpoints through a couple of imaging devices to produce a pair of images of the same subject, a digital photo frame that displays a stereoscopic image using these two images, and a stereoscopic printer that makes a photo print of a stereoscopic image on the basis of the two images. Such a stereoscopic digital picture system is disclosed for example on the Internet, in the Homepage of Fuji Film Co.:
(http://www.fujifilm.com/photokina2008/pdf/release/finepix_real3d_e.pdf)
corresponding to
(http://www.fujifilm.co.jp/corporate/news/article/ffnr0226.html)

The pair of images as being captured simultaneously from different viewpoints by the binocular digital camera have parallax therebetween, so these images will be called parallax images hereinafter. The digital photo frame displays each pair of parallax images overlaid atop another on a stereoscopic display screen in such a manner that an observer who looks at the screen will see one image with one's right eye and the other image with one's left eye, perceiving the displayed images as a stereoscopic image due to their parallax.

It is known in the art that such a stereoscopic image imposes a heavier burden on the observer's eyes than a normal two-dimensional (2D) image, because when the observer perceives the parallax images as one stereoscopic image there is a difference between a view distance from the observer's eyes to an image plane of the parallax images and a convergent distance from the observer's eyes to an intersection point where the line of sight from the right eye intersects with the line of sight from the left eye. The burden on the eyes is proved to get heavier as the difference between the view distance and the convergent distance increases. The convergent distance varies depending upon the amount of parallax between the two images.

A digital picture system addressed to lighten the burden of stereoscopic images on the observer's eyes has been suggested for example in US Patent No. 6,614,927 (corresponding to JPA 1998-355808), wherein the amount of parallax between a pair of parallax images is detected before producing a stereoscopic image from these parallax images, to evaluate based on the parallax amount how much the stereoscopic image will burden the observer's eyes. If the result of evaluation shows that the degree of stress the stereoscopic image will put on the eyes is unacceptable, the parallax images are automatically modified so as to produce a simple 2D (two-dimensional) image.

In this prior art, a stereoscopic image may be automatically switched to a 2D image depending on the stress degree evaluated by the parallax. That is, 2D images may be unexpectedly merged in between stereoscopic images on the display screen. In that case, the observer expecting stereoscopic images may feel strange or uncomfortable. In addition, watching stereoscopic images mixed with 2D images could be a heavier burden to the eyes rather than watching stereoscopic images alone.

### SUMMARY OF THE INVENTION

An object of the present invention is to display stereoscopic images using only those parallax images which are adequate for displaying images stereoscopically.

A stereoscopic image recording apparatus according to the present invention comprises a parallax amount measuring device that extracts corresponding points from a set of images of an identical scene captured from different viewpoints to use for displaying a stereoscopic image, detects a parallax amount between each set of the corresponding points, and takes statistics on frequency of occurrence of detected parallax amounts; a stereoscopic adequacy evaluating device that calculates from the statistics a cumulative frequency of those parallax amounts which are not less than a threshold value, evaluates adequacy of the images for stereoscopic display on the basis of the cumulative frequency, and decides the level of recommendability of the images for stereoscopic display on the scale of at least two grades according to the evaluated adequacy; and an image storing device for storing the images in associated with recommendability information on the recommendability level decided by the stereoscopic adequacy evaluating device.

The stereoscopic adequacy evaluating device compares the calculated cumulative frequency with at least a cumulative frequency threshold level to decide the recommendability level. The stereoscopic adequacy evaluating device preferably decides the recommendability level to be a higher grade when the cumulative frequency is lower than the cumulative frequency threshold level, and decides the recommendability level to be a lower grade when the cumulative frequency is higher than the cumulative frequency threshold level.

When the images are image frames to be output in continuous succession to constitute a stereoscopic moving image, the parallax amount measuring device preferably detects the parallax amount and takes statistics on frequency of occurrence of the parallax amounts with respect to each set of the image frames, and the stereoscopic adequacy evaluating device decides the recommendability level of each set of the image frames.

The image storing device preferably stores the images and the recommendability information as an image file.

A stereoscopic image recording method according to the present invention comprises a parallax amount measuring step, including the steps of extracting corresponding points from a set of images of an identical scene captured from different viewpoints to use for displaying a stereoscopic image, detecting a parallax amount between each set of the corresponding points, and taking statistics on frequency of detected parallax amounts; a stereoscopic adequacy evaluation step, including the steps of calculating from the statistics a cumulative frequency of those parallax amounts which are not less than a threshold value, evaluating adequacy of the images for stereoscopic display on the basis of the cumulative frequency, and deciding the level of recommendability of the images for stereoscopic display on the scale of at least two grades according to the evaluated adequacy; and an image storing step of storing the images with information on the recommendability level decided by the stereoscopic adequacy evaluating device.

A stereoscopic image outputting apparatus according to the present invention comprises an output device for outputting a stereoscopic image using a set of images of an identical scene captured from different viewpoints; and an output control device that reads recommendability information representative of adequacy of the images for stereoscopic display, and changes output condition of the output device depending on the adequacy for stereoscopic display.

The output control device preferably decides on the basis of the recommendability information whether or not to output a stereoscopic image using the images, and controls the output device to output the stereoscopic image using the images when the output control device decides to output it. The output control device may also control the output device on the basis of the recommendability information, to change the size or time duration for reproducing a stereoscopic image using the images.

When the images are image frames to be output in continuous succession to constitute a stereoscopic moving image, the output control device preferably decides whether or not to output the image frames of each set depending on the recommendability information attached to each set of the image frames, and when the output control device decides not to output a set of the image frames, the output control device controls the output device to continue outputting another set of image frames which have been output immediately before.

Preferably, each set of the images are stored along with the recommendability information in an image file, and the output control device reads out a plurality of the image files to display a graph showing the numbers of image files belonging to respective levels of adequacy for stereoscopic display as represented by the recommendability information.

A stereoscopic image outputting method according to the present invention comprises the steps of reading recommendability information representative of adequacy of a set of images of an identical scene captured from different viewpoints for use in displaying a stereoscopic image; and changing output condition of a device for outputting a stereoscopic image using the images, depending on the adequacy of the images for stereoscopic display.

A stereoscopic image recording outputting system of the present invention comprises a parallax amount measuring device that extracts corresponding points from a set of images of an identical scene captured from different viewpoints to use for displaying a stereoscopic image, detects a parallax amount between each set of the corresponding points, and takes statistics on frequency of occurrence of detected parallax amounts; a stereoscopic adequacy evaluating device that calculates from the statistics a cumulative frequency of those parallax amounts which are not less than a threshold value, evaluates adequacy of the images for stereoscopic display on the basis of the cumulative frequency, and decides the level of recommendability of the images for stereoscopic display on the scale of at least two grades according to the evaluated adequacy; an image storing device for storing the images associated with recommendability information on the recommendability level decided by the stereoscopic adequacy evaluating device; an output device for outputting a stereoscopic image using a set of images of an identical scene captured from different viewpoints; and an output control device that reads the recommendability information on the images as stored by the image storing device, and changes output condition of the output device depending on the adequacy of the images for stereoscopic display represented by the recommendability information.

According to the present invention, each pair of parallax images captured from different viewpoints are evaluated objectively in view of adequacy for stereoscopic display, and a recommendability level is recorded in association with these parallax images, to indicate the objective adequacy of these image for stereoscopic display. When displaying a stereoscopic image using the parallax images, the output condition is changed according to the recommendability level, thereby to optimize the stereoscopic display.

### BRIEF DESCRIPTION OF THE DRAWINGS

The above and other objects and advantages of the present invention will be more apparent from the following detailed description of the preferred embodiments when read in connection with the accompanied drawings, wherein like reference numerals designate like or corresponding parts throughout the several views, and wherein:
Figure 1 is a perspective view illustrating a stereoscopic image capturing reproducing system according to an embodiment of the present invention;
Figure 2 is an explanatory diagram illustrating the principle of displaying a stereoscopic image using a pair of parallax images that have parallax therebetween;
Figure 3 is a block diagram illustrating a structure of a binocular digital camera;
Figure 4 is a diagram illustrating a pair of parallax images captured by the binocular digital camera, showing corresponding points of these images and a parallax amount between the corresponding points;
Figure 5 is a flowchart illustrating a procedure for capturing a pair of parallax images by the binocular digital camera;
Figure 6 is a flowchart illustrating a procedure for evaluating recommendability of each pair of parallax images for stereoscopic display during 3D still image capturing;
Figure 7 is a flow chart illustrating a procedure for calculating a histogram of parallax amounts between the parallax images;
Figure 8 is a parallax amount histogram of such parallax images that are taken from a scene containing human subjects with a landscape on its background;
Figure 9 is a parallax amount histogram of such parallax images that are taken from a scene containing a building with a background of uniform texture;
Figure 10 is a parallax amount histogram of such parallax images that are taken from a scene containing a complicated pattern as the whole;
Figure 11 is a histogram shown of such parallax images that are taken from a scene containing human subjects with a background of uniform texture;
Figure 12 is a block diagram illustrating a structure of a 3D still image file produced by the 3D still image capturing;
Figure 13 is flowchart illustrating a procedure for evaluating recommendability of image frames for stereoscopic display during 3D moving image capturing;
Figure 14 is a block diagram illustrating a structure of a 3D moving image file produced by the 3D moving image capturing;
Figure 15 is a block diagram illustrating an internal structure of a digital photo frame;
Figure 16 is a flowchart illustrating a procedure in the digital photo frame for sorting and registering 3D still image files on a list of recommendable images;
Figure 17 is a flowchart illustrating a procedure in the digital photo frame for sorting and registering 3D moving image files on a list of recommendable images;

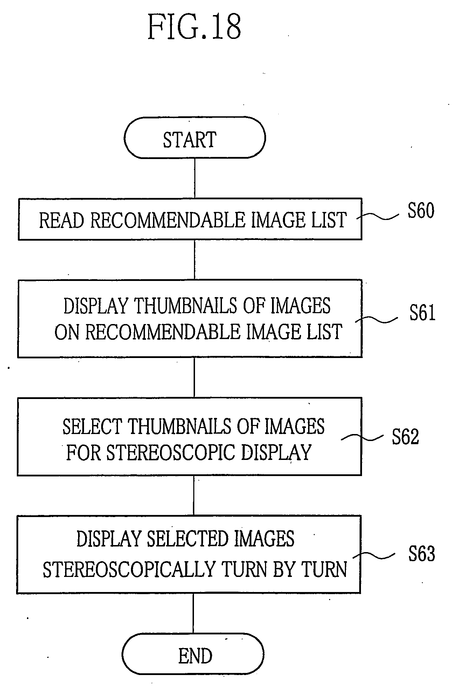

Figure 18 is a flowchart illustrating a procedure for stereoscopic display on the digital photo frame, according to a first embodiment;
Figure 19 is a flowchart illustrating a procedure for stereoscopic display on the digital photo frame, according to a second embodiment;
Figure 20 is an explanatory diagram illustrating different image display sizes used in the second embodiment, which are switchable according to recommendability levels;
Figure 21 is a flowchart illustrating a procedure for stereoscopic display on the digital photo frame, according to a third embodiment; and
Figure 22 is a graph showing a correlation between recommendability levels and the number of image files, the graph being displayed on the digital photo frame.

### DESCRIPTION OF THE PREFERRED EMBODIMENTS

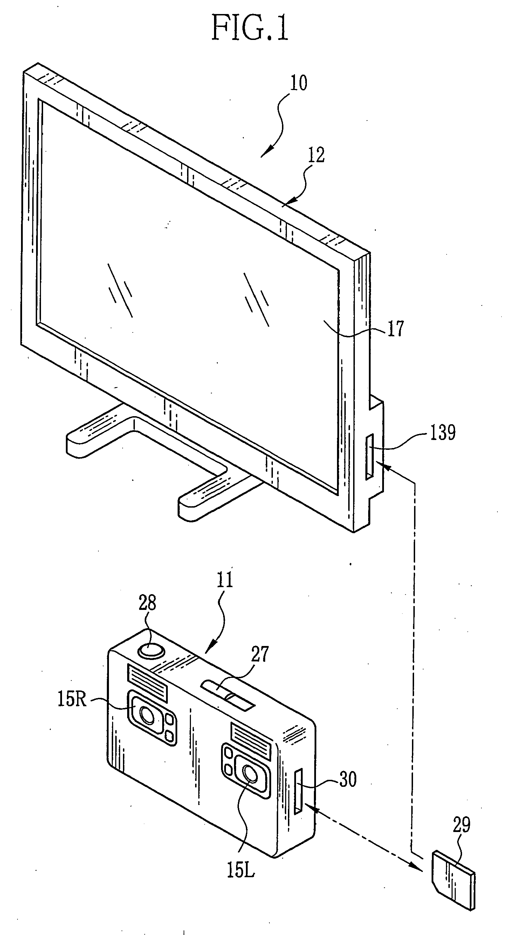

In Fig. 1 is illustrated a stereoscopic image capturing reproducing system 10 according to an embodiment of the present invention. The system 10 consists of a binocular digital camera 11 that embodies the stereoscopic image recording apparatus of the present invention, and a digital photo frame 12 that embodies the stereoscopic image outputting apparatus of the present invention.

The binocular digital camera 11, hereinafter referred to simply as the camera 11, has a first imaging unit 15L and a second imaging unit 15R, which are horizontally spaced apart from each other, so that the camera 11 can shoot an identical subject from different viewpoints simultaneously to capture a pair of images of the subject having parallax therebetween. The digital photo frame 12 can reproduce the images captured by the camera 11 on a LCD panel 17 such that one image of each pair is perceived by observer's right eye, while the other image is perceived by observer's left eye, so that the displayed images may be perceived as a stereoscopic image. Hereinafter, an image captured by the first imaging unit 15L and perceived by the left eye will be referred to as a left image, and an image captured by the second imaging unit 15R and perceived by the right eye will be referred to as a right image.

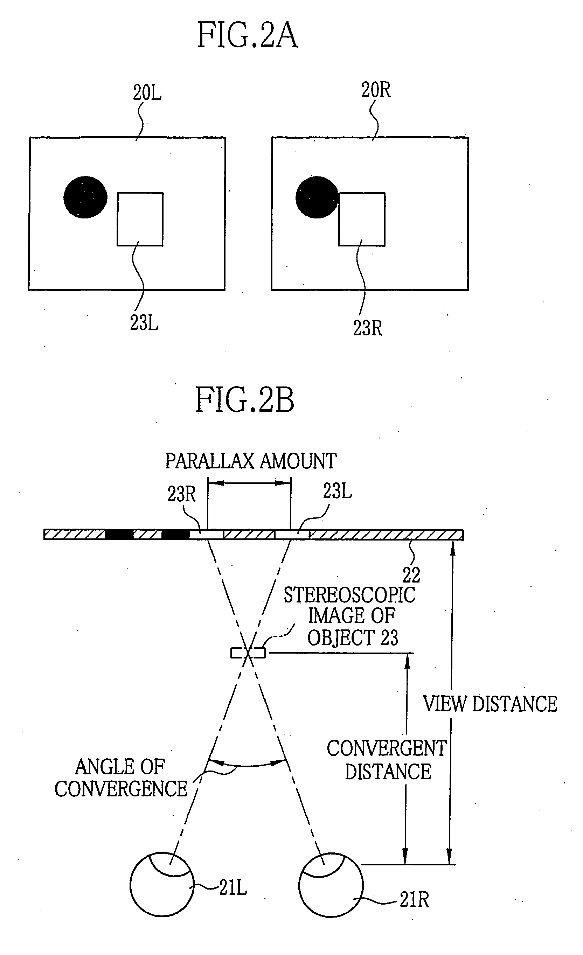

The principle of displaying a stereoscopic image on the digital photo frame 12 is illustrated in Fig. 2, wherein Fig. 2A shows an example of right and left parallax images 20R and 20L for displaying a stereoscopic image, and Fig. 2B illustrates how the observer perceives these images 20R and 20L as a stereoscopic image when they are displayed on one another on a screen 22 of the LCD panel 17. In Fig. 2, reference numerals 21L and 21R designate the observer's left and right eyes respectively, and reference numerals 23L and 23R designate images of an identical object contained in the left and right images 20L and 20R respectively.

As shown in Fig. 2B, the position of the object 23R within the right image 20R shifts relatively from the position of the same object 23L within the left image 20L due to parallax between these images 20R and 20L. Hereinafter, the relative shift amount of an identical object between the right and left images will be called the parallax amount. When the observer looks at this object on the screen 22, the line of sight from the right eye 21R intersects with the line of sight from the left eye 21L at a point proximal to the observer from the screen 22, making the image of the object look three-dimensional, and the observer feels like the object protrudes from the screen 22. Hereinafter, the angle at which the lines of sight from the right and left eyes intersect will be called the angle of convergence, and the intersection point of both sight lines will be called the sight convergent point, whereas the distance from the eyes to the sight convergent point will be called the convergent distance.

While the observer is looking at the screen 22, the eyes individually focus on the screen 22. If the screen 22 displays a simple 2D image, the convergent distance is normally equal to the view distance that is the distance from the observer's eyes to the screen 22. However, since the convergent distance is shorter than the view distance for the stereoscopic display, the focus of each eye unnaturally differs from the sight convergent point. Therefore, the stereoscopic display can put a certain load on the eyes, and the stress on the eyes will increase as the difference between the view distance and the convergent distance increases.

In view of the fact that the difference between the view distance and the convergent distance varies depending on the parallax amount, the present invention evaluates the adequacy of the right and left images for the stereoscopic display on the basis of the parallax amount between these two images.

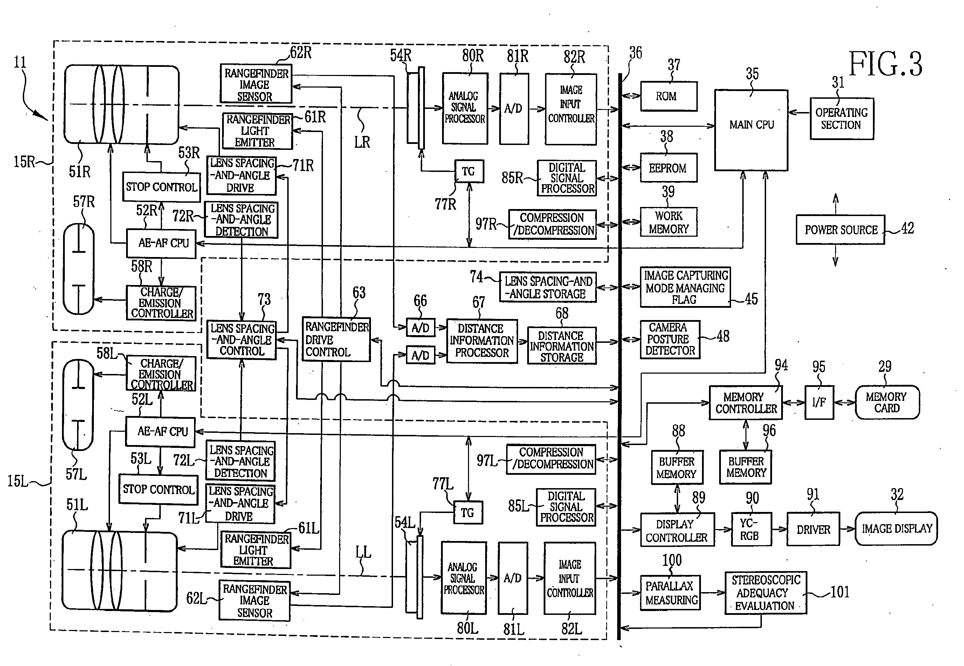

Referring back to Fig. 1, the first and second imaging units 15L and 15R are mounted on upper front portions of the camera 11. The camera 11 has a power/mode switch 27 and a shutter release button 28 on its top side. The camera 11 also has a card slot 30 on its left side for loading a memory card 29 as an image recording medium. Although it is not illustrated in detail, an operating section 31 (see Fig. 3) and an image display section 32 (see Fig. 3) are provided on its back side of the camera 11. The image display section 32 serves as an electronic viewfinder for image capturing, but also serves as a monitor for reproducing a captured image.

Referring to Fig. 3, main CPU 35 supervises the overall operation of the camera 11 according to a certain control program in response to inputs from the operating section 31. The CPU 35 is connected to ROM 37, EEPROM 38 and a work memory 39 via a system bus 36. The ROM 37 stores the control programs and a variety of data necessary for the CPU 35 to execute the control programs. The EEPROM 38 stores many kinds of setup information relating to the operation of the camera 11, including information set up by the user. The work memory 39 includes an operational work memory segment and a temporary memory segment for storing image data temporarily.

The operating section 31 is manipulated by the user to input various signals in the camera 11, and includes the above-mentioned power/mode switch 27, the release button 28 and a not-shown mode dial. The power/mode switch 27 is to turn a power source of the camera 11 on or off, as well as to switch the camera 11 between a reproduction mode and an image capturing mode. As the power/mode switch 27 is turned on, a power source circuit 42 starts supplying power to respective components of the camera 11, to actuate the respective components of the camera 11. As the power/mode switch 27 is turned off, the power source circuit 42 stops supplying power to the respective components of the camera 11.

The image capturing mode may include for example a 2D still image capturing mode for capturing a two-dimensional still image, a 2D moving image capturing mode for capturing a two-dimensional moving image, a 3D still image capturing mode for capturing a three-dimensional still image, and a 3D moving image capturing mode for capturing a three-dimensional moving image. The mode dial is manipulated to switch over between these image capturing modes.

The camera 11 is configured to record a pair of right and left parallax images as a 3D still image file in the 3D still image capturing mode, each time the right and left images are captured through the imaging units 15R and 15L in response to an operation on the release button 28. The camera 11 can also record multiple pairs of right and left images as a series of successive frames for displaying a 3D moving image in the form of a 3D moving image file in the 3D moving image capturing mode.

When the camera 11 is set to the 2D still image capturing mode or the 2D moving image capturing mode, a flag indicating that the camera 11 is in the 2D mode for capturing a 2D image is set in an image capturing mode managing flag register 45. When the camera 11 is set to the 3D still image capturing mode or the 3D moving image capturing mode, a flag indicating that the camera 11 is in the 3D mode for capturing a 3D image is set in the image capturing mode managing flag register 45. The CPU 35 refers to the image capturing mode managing flag 45 to discriminate the image capturing mode between the 2D mode and the 3D mode.

The release button 28 is a two-stoke switch that has a halfway position and a full-pressed position. When the release button 28 is pressed to the halfway position in the still image capturing mode, preliminary processes for imaging, such as an automatic exposure (AE) control process, an automatic focusing (AF) process and an automatic white balance (AWB) control process, are executed. When the release button 28 is pressed to the full-pressed position in the still image capturing mode, a still image is captured to be recorded in a recording medium. In the moving image capturing mode, a moving image starts being recorded upon the release button 28 being pressed to the full. Thereafter when the release button 28 is pressed again, recording of the moving image stops. In another embodiment, the camera 11 may have a release button specific for still image capturing and a second release button specific for moving image capturing.

The image display section 32 includes a 3D monitor of parallax barrier type or lenticular lens type, which can display stereoscopic images using parallax images captured by the first and second imaging units 15L and 15R during the image capturing. The image display section 32 can also display stereoscopic images based on the recorded parallax images.

A camera posture detector circuit 48 includes a sensor for detecting the posture of the camera 11 and outputs the detected posture of the camera 11 to the CPU 35. The CPU 35 determines based on the detected camera posture whether to process the captured right and left images as vertical ones or horizontal ones.

Now the imaging operation of the camera 11 will be described with reference to Fig. 3. The first and second imaging units 15L and 15R substantially has the same structure, so the same components of the first and second imaging units 15L and 15R are designated by the same reference numerals but discriminated by "L" and "R" added as abbreviations for left and right, respectively. In the following description, each component of the imaging units 15L and 15R will be described in a singular form without attaching "L" and "R" to the reference numeral, unless it is necessary to refer to both of the same components for explanation.

A taking lens 51 includes a zoom lens, a focus lens and a stop. The zoom lens and the focus lens are movable back and forth along an optical axis (LL and LR in the drawings). The CPU 35 controls driving a not-shown zoom actuator via an AE-AF CPU 52, to control the position of the zoom lens for zooming. The CPU 35 also controls driving a not-shown focus actuator via the AE-AF CPU 52, to control the position of the focus lens for focusing. The CPU 35 drives a stop control 53 via the AE-AF CPU 52, to control the aperture of the stop (exposure amount) to control the amount of incident light on an image sensor 54.

In the 3D mode, the CPU 35 drives the taking lenses 51L and 51R of the imaging units 15L and 15R in synchronism with each other to capture a plurality of images. That is, the taking lenses 51L and 51R are always set at an equal focal distance (zoom ratio) to each other. In the 3D mode, the stops of the taking lenses 51L and 51R are controlled to provide an equal incident light amount (exposure value) to each other, and the taking lenses 51L and 51R are always focused on the same subject.

A flash projector 57 includes for example a discharge tube (xenon tube) to project a flash of light toward a dark subject or in a backlit scene. A charge/emission controller 58 includes a main capacitor for supplying current to the flash projector 57 for the light emission. The CPU 35 outputs a flash command to the AE-AF CPU 52 so as to control charging and discharging the main capacitor, as well as the duration of emission from the flash projector 57. The flash projector 57 may alternatively be a light emission diode (LED).

The imaging unit 15 includes a rangefinder light emitter 61, e.g. an LED, and a rangefinder image sensor 62 for capturing an image of a subject that is illuminated by the rangefinder light emitter 61. The image captured by the rangefinder image sensor 62 is served as a rangefinder image for measuring distance to the subject. A common rangefinder drive control circuit 63 drives the rangefinder light emitter 61 to emit light at predetermined timing and controls the rangefinder image sensor 62 to capture the rangefinder image.

The rangefinder image is converted to digital data through an A/D converter 66, and is fed to a distance information processor circuit 67. Based on the rangefinder image, the distance information processor circuit 67 calculates a distance from the camera 11 to the subject, i.e. subject distance, according to the principle of triangulation. The subject distance calculated by the distance information processor circuit 67 is stored in a distance information storage circuit 68.

The distance information processor circuit 67 may use the TOF (time of flight) method, wherein the subject distance is calculated based on the time from emission of a light beam from the rangefinder light emitter 61 to reception of the light beam reflected from the subject at the rangefinder image sensor 62, and the speed of light.

The imaging unit 15 also includes a lens spacing-and-angle drive circuit 71 and a lens spacing-and-angle detection circuit 72. The CPU 35 controls the lens spacing-and-angle drive circuit 71 via a common lens spacing-and-angle control circuit 73 to adjust the spacing and the angle of convergence between the taking lenses 51L and 51R.

The lens spacing-and-angle detection circuit 72 includes an electric wave sending receiving device. The CPU 35 actuates the lens spacing-and-angle detection circuits 72L and 72R via the lens spacing-and-angle control circuit 73, to communicate the electric wave with each other to detect the spacing and the angle of convergence between the taking lens 51L and 51R. The detected spacing and the angle of convergence between the taking lenses 51L and 51R are stored in a lens spacing-and-angle storage circuit 74.

In an example, the image sensor 54 is constituted of a CCD. A great number of photodiodes are arranged in a two-dimensional array on a photoreceptive surface of the image sensor 54, and filters of three primary colours (R, G, B) are arranged in front of the photodiodes in a predetermined arrangement. An optical image of the subject formed through the taking lens 51 on the photoreceptive surface of the image sensor 54 is converted through these photodiodes to signal charges of corresponding amounts to the incident light amounts. The signal charges accumulated in the respective photodiodes are sequentially read out from the image sensor 54 on the basis of drive pulses, which are generated from a timing generator (TG) 77 in response to a command from the CPU 35, outputting RGB signals of voltages corresponding to the signal charges. The image sensor 54 can function as an electronic shutter controlling the charge storage time in the photodiodes to control the exposure time (shutter speed).

Note that the image sensor 54 is not limited to the CCD type but may be a CMOS image sensor or other type of image sensor.

Analogue signal processor 80 includes a correlated double sampling circuit (CDS) for eliminating reset-noises (low frequency noises) from the RGB signals from the image sensor 54, and an AGS circuit for amplifying the RGB signals to a constant magnitude level. The analogue RGB signals at the output of the image sensor 54 are subjected to the correlated double sampling process and amplified in the analogue signal processor 80, and thereafter converted to digital RGB signals through an A/D converter 81 and input in an image input controller (buffer memory) 82.

A digital signal processor 85 includes a synchronizing processing circuit (a processing circuit that compensates for special lags among output signals of different colours from a single CCD, due to the colour filter arrangement on the single CCD, by interpolating colour signals so as to synchronize the different colour signals), a white-balance adjusting circuit, a gradation conversion circuit (gamma correction circuit), an edge correction circuit, and a luminance-chrominance signal production circuit. As being input in the image input controller 82, the digital RGB signals are processed by the digital signal processor 85 for the synchronizing, the white-balance adjustment, the gradation conversion, the edge correction and other necessary treatments, and converted to a YC signal that is composed of a luminance signal (Y-signal) and chrominance signals (Cr and Cb signals). The YC signal is stored in a work memory 39.

While the image display section 32 is functioning as the electronic viewfinder, the YC signal produced from the digital signal processor 85 is sequentially fed to a buffer memory 88. A display controller 89 reads and transfers the YC signal from the buffer memory 88 to a YC/RGB converter 90. The YC/RGB converter 90 converts the YC signal to the original RGB signal, and outputs the RGB signal to the image display section 32 via a driver 91. Thus, the image display section 32 displays a through-image or live-view image of objects existing in the field of view of the camera 11.

In the reproduction mode, a memory controller 94 accesses the memory card 29 via an interface (I/F) 95 to read out compressed image data from a recorded image file into a buffer memory 96. Then the image data is decompressed to YC signal by a compression/decompression processor 97, and the uncompressed YC signal is fed to the buffer memory 88. The display controller 89 reads out and transfers the YC signal from the buffer memory 88 to the YC/RGB converter 90. The YC/RGB converter 90 converts the YC signal to the original RGB signal, and outputs the RGB signal to the image display section 32 via the driver 91. Thus, the image display section 32 displays an image recorded on the memory card 29.

Next, the processes for image capturing and recording will be described. In the 2D mode, an image to be recorded is captured by one of the imaging units, e.g. the first imaging unit 15L. Image data of the image captured by the first imaging unit 15L is compressed by the compression/decompression processor 97L, and is recorded as an image file of a predetermined format on the 29 through the memory controller 94 and the interface 95. For example, a 2D still image is recorded as a compressed image file of JPEG (Joint Photographic Experts Group) format, whereas a 2D moving image is recorded as a compressed image file of MPEG2 or MPEG4 format compatible to H.264 standard.

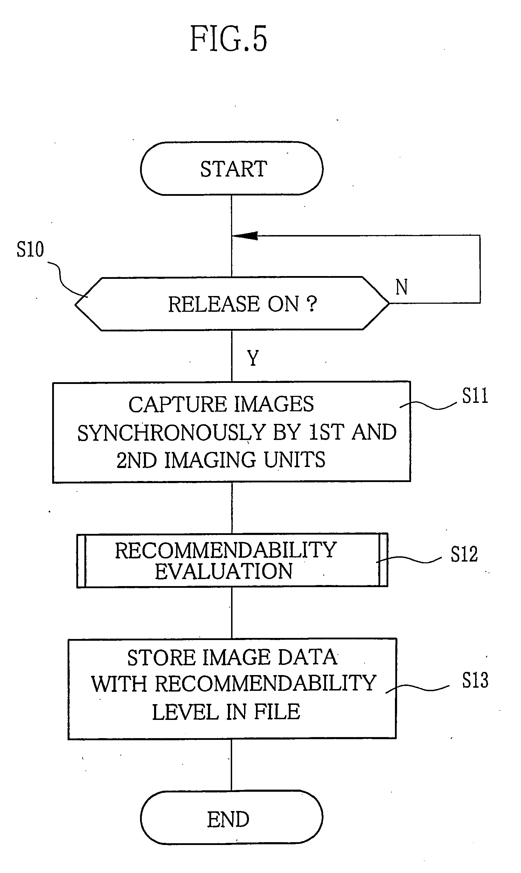

Referring to Fig. 5 illustrating a sequence of operation in the 3D still image capturing mode, when the release button 28 is pressed to the full (S10), the imaging units 15L and 15R synchronously capture left and right parallax images respectively (S11). Note that the AF and AE processes are executed based on the image signal from either one of the imaging units 15L and 15R. The parallax images captured by the imaging units 15L and 15R are processed in the digital signal processors 85L and 85R, and then written in the work memory 39.

A parallax measuring circuit 100 and a stereoscopic adequacy evaluation circuit 101 (see Fig. 3) evaluate the adequacy for stereoscopic display with respect to the parallax images captured simultaneously by the imaging units 15L and 15R based on the parallax amount between these two images. According to the evaluated adequacy for stereoscopic display, the stereoscopic adequacy evaluation circuit 101 decides the level of recommendability of these parallax images for stereoscopic display (S12).

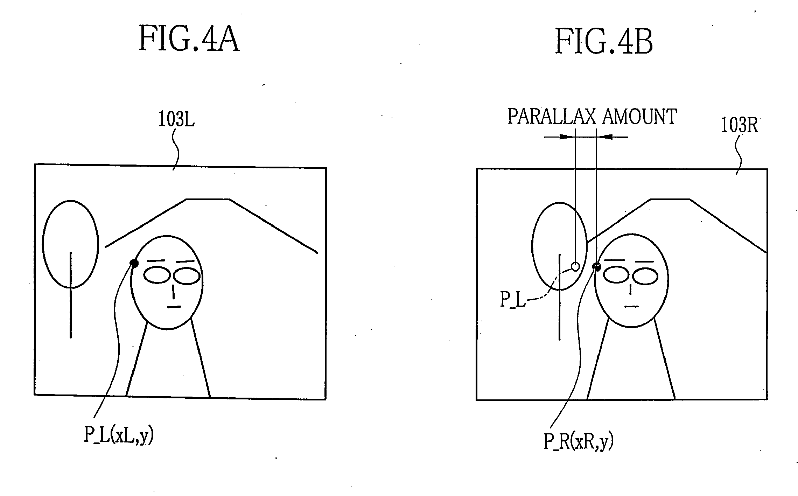

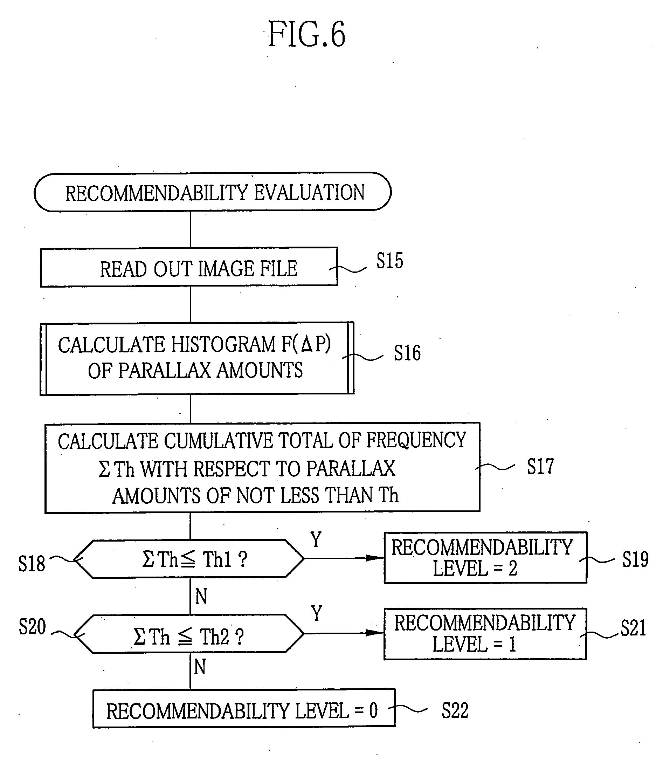

A sequence of recommendability evaluation (S12) in the stereoscopic adequacy evaluation circuit 101 will be described with reference to Fig. 4 showing an example of a pair of parallax images 103L and 103R captured by the imaging units 15L and 15R, as well as the flowchart of Fig. 6. The parallax measuring circuit 100 reads out the images 103L and 103R from the work memory 39 (S15), to calculate a histogram F( ΔP) of the parallax amounts between these images 103L and 103R (S16).

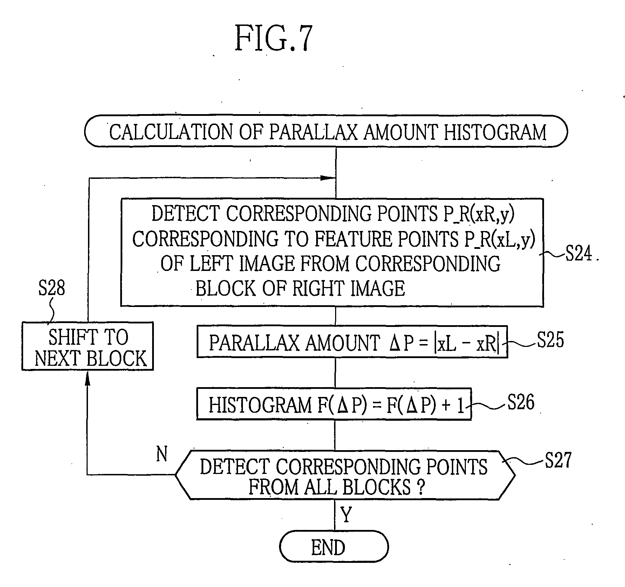

Specifically, as shown in Fig. 7, the parallax measuring circuit 100 extracts corresponding points between the images 103L and 103R, using an appropriate method such as a block matching method for example (S24). The parallax measuring circuit 100 defines either one of the images 103L and 103R as a reference image, and the other as a searched image. Next, multiple feature points such as edges are extracted from the reference image, and the reference image is divided into several blocks. Then, using images of the respective blocks as template images, those blocks of the searched image which match the template images are determined according to any appropriate method such as the sum of squared difference (SSD) or the sum of absolute difference (SAD), where the sum of squared differences between pixel values or the sum of absolute differences between pixel values is calculated. The parallax measuring circuit 100 extracts corresponding points to the feature points of the reference image from the matched blocks of the searched image.

In Fig. 4, the image 103L is provided as the reference image, and the image 103R is provided as the searched image, so that a corresponding point P_R(xR,y) is extracted from the searched image 103R as the point corresponding to a feature point P_R(xL,y) of the reference image 103L. The parallax measuring circuit 100 measures a distance between the feature point P_R(xL,y) and the corresponding point P_R(xR,y), e.g. an absolute value of xL - xR, to serve the distance as a parallax amount ΔP (S25). Note that though Fig. 4 merely shows one feature point and one corresponding point, many feature points and corresponding points are actually extracted to measure many parallax amounts between the respective feature points and the corresponding points.

Next, the parallax measuring circuit 100 calculates a histogram F(ΔP) showing the measured parallax amounts ΔP and the frequency F or the number of occurrences of each parallax amount ΔP (S26). For example, the histogram F(ΔP) is calculated by adding "1" to the frequency F of the same parallax amount ΔP each time the same parallax amount is measured. The steps of measuring the parallax amount (S24) to calculating the histogram (S26) are repeated till all corresponding points to the feature points of the reference image 103L are detected with respect to all blocks (S27, S28).

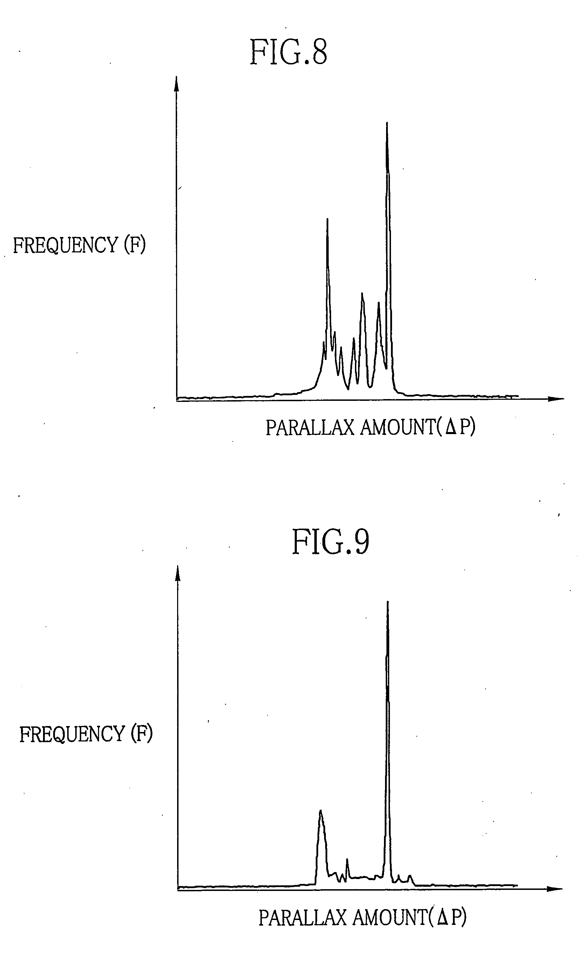

Several examples of the parallax amount histogram as calculated by the parallax measuring circuit 100 are shown in Figs. 8 to 11. The histogram shown in Fig. 8 is of such parallax images that are taken from a scene containing human subjects with a landscape on its background. For such a scene, a great number of feature points and corresponding points are extracted from the main human subject and the background as well, and peaks of the frequency F appear at many parallax amounts. On the other hand, the histogram shown in Fig. 9 is of such parallax images that are taken from a scene containing a building with a background of featureless uniform texture. For such a scene, a greater number of feature points and corresponding points are extracted from the main subject, the building, and fewer feature points and corresponding points are extracted from the background. As a result, peaks of the frequency F come at limited parallax amounts.

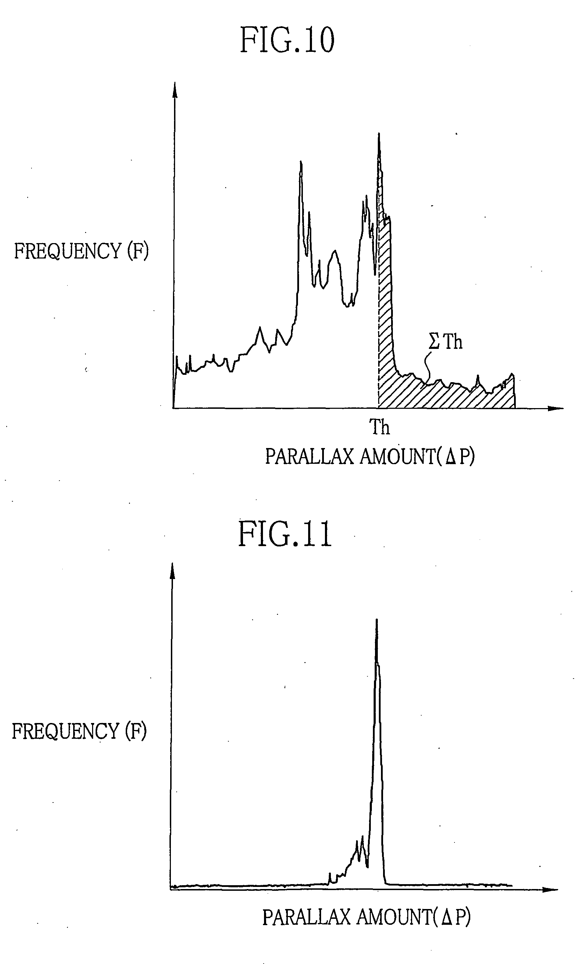

The parallax amount histogram shown in Fig. 10 is of such parallax images that are taken from a scene containing a complicated pattern in the whole area and thus a lot of information. For such a scene, a great number of feature points and corresponding points are extracted from the whole image area, and the frequency of occurrence F has peaks at many parallax amounts. The histogram shown in Fig. 11 is of such parallax images that are taken from a scene containing human subjects with a background of featureless uniform texture. For such a scene, a greater number of feature points and corresponding points are extracted from the main human subject, and a fewer number of feature points and corresponding points are extracted from the background, so the peak of the frequency of occurrence F comes in a limited range of parallax amounts.

On the basis of the calculated parallax amount histogram, the stereoscopic adequacy evaluation circuit 101 calculates a cumulative total of the frequency of occurrence, cumulative frequency Σ *Th*, with respect to those parallax amounts which are not less than a threshold value Th (S17), as shown in Fig. 6. For example, when calculating the cumulative frequency Σ *Th* on the parallax amount histogram of Fig. 10, the stereoscopic adequacy evaluation circuit 101 decides a parallax amount ΔP that corresponds to the highest peak of the frequency F to be the threshold value Th, and calculates the cumulative frequency Σ *Th* of those parallax amounts which are not less than the threshold value Th. Note that, the threshold value Th may not be limited to the parallax amount ΔP that corresponds to the highest peak of the frequency F. For example, in the case where there are a plurality of peaks of the frequency F as shown in the parallax amount histograms of Figs. 8 and 10, a parallax amount ΔP that corresponds to the lowest peak of the frequency F may be decided to be the threshold value Th. Alternatively, an average of the frequency F is calculated at first, and then the parallax amount ΔP that corresponds to the average is obtained from the parallax amount histogram and decided to be the threshold value Th.

The stereoscopic adequacy evaluation circuit 101 compares the cumulative frequency Σ *Th* with threshold levels Th1 and Th2 therefor, which are stored in the ROM 37 and are preset to be Th1 < Th2. The threshold levels Th1 and Th2 for cumulative frequency may for example be predetermined according to a sensory test method that organoleptically examines a relationship between the cumulative frequency of the parallax amounts and the degree of fatigue of observer's eyes. Setting two threshold levels Th1 and Th2 is making three-grade evaluation on recommendability of the parallax images in view of adequacy for stereoscopic display. That is, the number of threshold values for the cumulative frequency may change depending on how many grades should be provided on the scale for evaluating the recommendability.

The stereoscopic adequacy evaluation circuit 101 first compares the cumulative frequency Σ *Th* with the lower threshold level Th1 (S18). When the cumulative frequency Σ *Th* is not more than the threshold levels Th1, it means that the parallax amounts between the parallax images are small as the whole, and thus the fatigue of observer's eyes is considered small. Then, the recommendability level of these parallax images is rated at the highest grade, i.e. "2" in this embodiment (S19).

When the cumulative frequency Σ *Th* is more than the threshold level Th1, the stereoscopic adequacy evaluation circuit 101 compares the cumulative frequency Σ *Th* with the higher threshold level Th2 (S20). When the cumulative frequency Σ *Th* is not more than the threshold level Th2, it means that the parallax amounts are medium as the whole, so the recommendability level of these parallax images is rated at the intermediate grade "1" (S21).

When the cumulative frequency Σ *Th* is more than the threshold level Th2, it means that the parallax amounts are large as the whole, so the recommendability level of these parallax images is rated at the lowest grade "0" (S22).

After the recommendability evaluation, the images 103L and 103R are compressed by the compression/decompression processor circuits 97L and 97R respectively, and then compiled in a 3D still image file when written on the memory card 29. Along with the compressed data of the parallax images, the 3D image file also stores information on the evaluated recommendability level, and other information relating to the parallax images, including the subject distance, and the reference length (spacing) and the angle of convergence between the taking lenses 51L and 51R (S13).

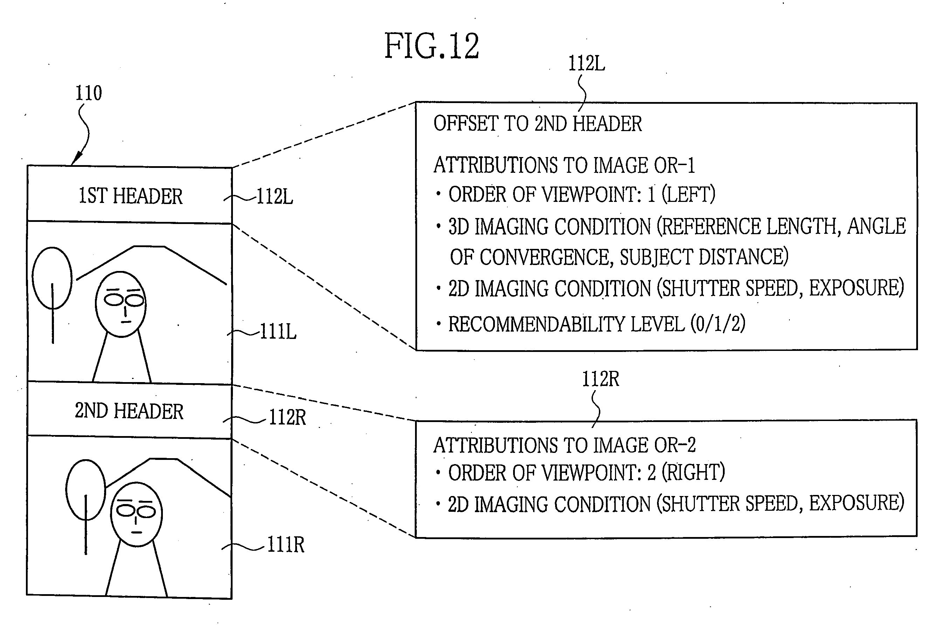

Referring to Fig. 12 showing a structure of the 3D still image file 110 that may be produced by the 3D still image capturing, the 3D still image file 110 includes image data 111L for the left image 103L, image data 111R for the right image 103R, and first and second headers 112L and 112R heading the image data 111L and 111R respectively.

The first header 112L records an offset amount from a data head to a leading end of the second header 112R, and attributions to the left image data 111L. Note that "OR-1" is an example of a title put on the left image data 111L as being stored in the 3D still image file 110.

The attributions to the left image data 111L include the order of viewpoint, 3D imaging condition, 2D imaging condition, and the recommendability level. The order of viewpoint indicates whether the stored image is the left one or the right one; an order number "1" is assigned to the left image, and an order number "2" to the right image. The 3D imaging condition represents information necessary for the stereoscopic display, which may include the reference length and the angle of convergence between the first and second imaging units 15L and 15R, and the subject distance information. The 2D imaging condition includes a shutter speed, an exposure value, and other information necessary for adjusting image quality in reproducing or printing the image. The recommendability level is represented by the grade rated by the stereoscopic adequacy evaluation circuit 101; the recommendability level is referred to by the digital photo frame 12 or the like on displaying a stereoscopic image based on the images 111L and 111R.

The second header 112R records attributions to the right image data 111R. The attributions to the right image data 111R include as its items the order of viewpoint and the 2D imaging condition having common contents to those of the first header 112L.

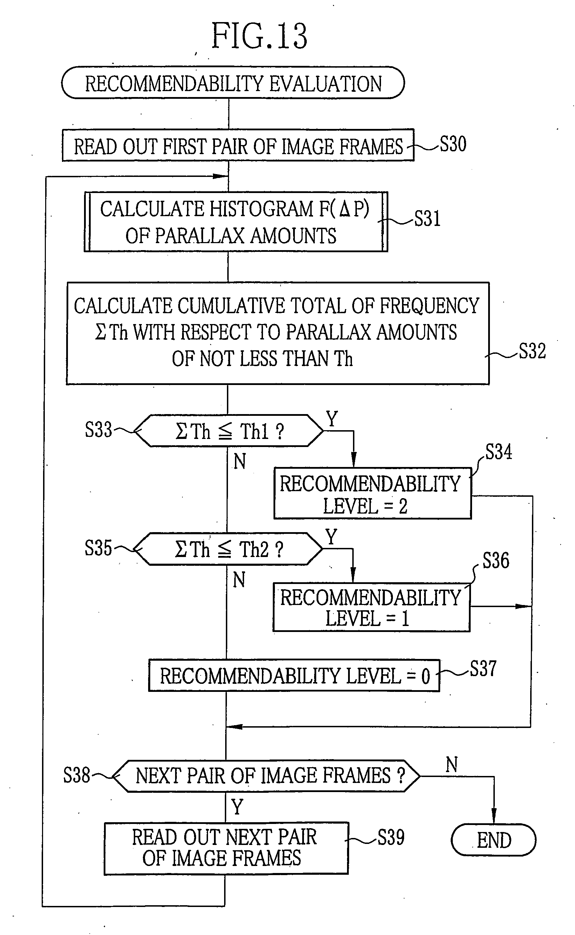

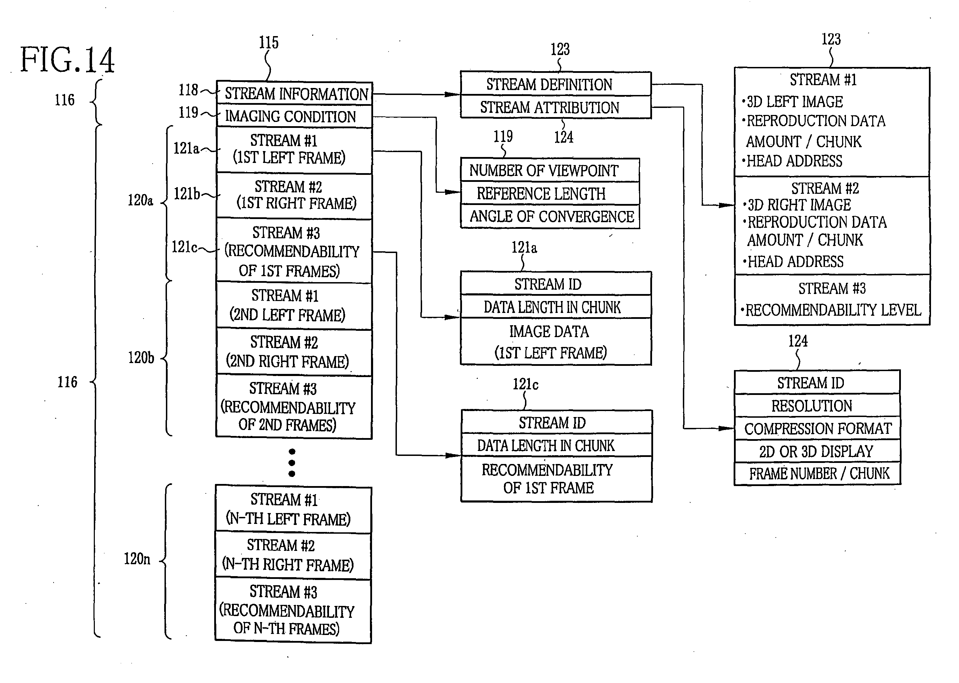

Next, the procedure for evaluating recommendability of a moving image for stereoscopic display in the 3D moving image capturing mode will be described with reference to Fig. 13. A structure of a 3D moving image file that may be produced to record image frames captured in the 3D moving image capturing mode will be described with reference to Fig. 14.

In the 3D moving image capturing, two moving images captured by the first and second imaging units 15L and 15R will be stored in the work memory 39, though the detail of this process is omitted here. The parallax measuring circuit 100 reads out the first image frames from the two moving images stored in the work memory 39 (S30).

The parallax measuring circuit 100 calculates a histogram F(ΔP) of the parallax amount between the read two image frames (S31). On the basis of the calculated histogram, the parallax measuring circuit 100 calculates a cumulative frequency Σ *Th* with respect to those parallax amounts which are not less than a threshold value Th (S32). Then the stereoscopic adequacy evaluation circuit 101 compares the cumulative frequency Σ *Th* with the threshold levels Th1 and Th2, to evaluate the recommendability of these image frames for stereoscopic display (S33 to S37). Note that the steps S33 to S37 in the 3D moving image capturing mode are fundamentally equal to the steps S18 to S22 in the 3D still image capturing mode as depicted in Fig. 6, so the detail of these steps will be omitted.

Next, the parallax measuring circuit 100 checks if there are any image frames following to the first image frames in the work memory 39 (S38), and reads out the following image frames (S39) to evaluate the recommendability of these frames in the same way as above (steps S31 to S39). Thus the recommendability levels are rated for each pair of image frames of a 3D moving image.

Referring to Fig. 14, the 3D moving image file 115 may be roughly sectioned into a header section 116 representing the structure and other information on the file 115, and an image data section 117 representing data of a moving image. The header section 116 consists of stream information 118 and imaging condition 119. The image data segment 117 consists of a plurality of data chunks 120a to 120n, each of which unites three data streams #1 to #3.

The stream information 118 includes definition 123 and attribution 124 with respect to the data streams. The stream definition 123 defines the contents of the respective data streams in the data chunks 120a to 120n. For example, the stream definition 123 defines that the data streams #1 and #2 are to contain the left and right image frames of the 3D moving image respectively, and also defines the data amount per chunk for the image reproduction, and a header address as well. The stream definition 123 also defines that the data stream #3 is to represent the recommendability level of the left and right image frames for stereoscopic display.

The stream attribution 124 represents attributions to the whole 3D moving image file 115. For example, a stream ID given to the 3D moving image file during its production process, resolution used for imaging, compression format, discrimination between 2D and 3D display, the number of frames per chunk, or other data are recorded as the stream attribution 124.

The imaging condition 119 records imaging condition set in the 3D moving image capturing mode. For example, the imaging condition includes the number of viewpoints, the reference length and the angle of convergence of the imaging units 15L and 15R. The number of viewpoint is "2" concerning the camera 11 of the present embodiment, whereas the reference length and the angle of convergence are those values used in the 3D moving image capturing mode.

In each of the data chunks 120a to 120n, the data stream #1 121 a and the data stream #2 121 b contain information about the left and right image frames respectively, which includes for example the same stream ID as the stream ID included in the stream attribute 124, the data length within each data chunk, and image data for one frame. The data stream #3 121 c contains the stream ID and the data length within each data chunk, like the data streams #1 and #2, in addition to the recommendability level.

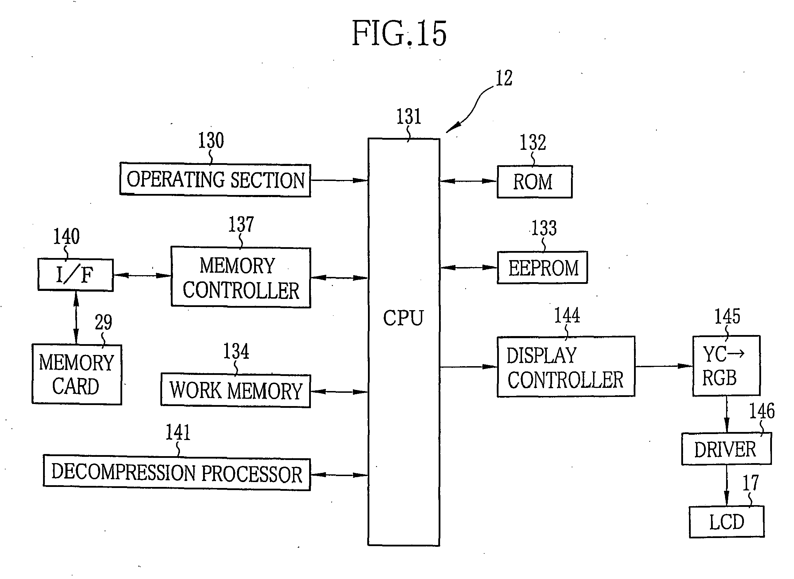

Next the digital photo frame 12 will be described with reference to Fig. 15. The digital photo frame 12 includes CPU 134 that supervises the overall operation of the camera 11 according to a predetermined control program on the basis of inputs from an operating section 130. The CPU 131 is connected to ROM 132, EEPROM 122 and a work memory 134. The ROM 132 stores the control program for the CPU 131 and various kinds of data necessary for the control. The EEPROM 133 stores various kinds of setup information and other information relating to the operation of the digital photo frame 12, including information set up by the user. A work memory 134 includes an operational work memory segment and a temporary memory segment for storing image files temporarily. The CPU 131 functions as an output control device of the present invention when operating according the control program stored in the ROM 132.

The CPU 131 is connected to a memory controller 137 for reading out image files from a memory card 29. The memory controller 137 is provided in a card slot 139 (see Fig. 1) of the digital photo frame 12. The memory controller 137 accesses the memory card 29 via an interface (I/F) 140 to read out a designed image file to be reproduced, and store the read image file temporarily in the work memory 134. The image file stored in the work memory 134 is decompressed to uncompressed YC signal by a compression/decompression processor 141.

A display controller 144 reads out and transfers the YC signal from the work memory 134 to YC/RGB converter 145. The YC/RGB converter 145 converts the YC signal to RGB signal, and outputs the RGB signal to the LCD panel 17 via a driver 146. Thus, an image captured by the camera 11 is reproduced and displayed on the LCD panel 17.

The LCD panel 17 may for example be a 3D monitor of parallax barrier type or lenticular lens type. Although the LCD panel 17 is not detailed in the drawings, the LCD panel 17 has a parallax barrier surface layer on its front. When displaying a stereoscopic image, the LCD panel 17 generates a parallax barrier pattern, or called slit array sheet, on the parallax barrier surface layer. The parallax barrier pattern has vertical light-permeable fragments and vertical light-shielding fragments alternating at predetermined intervals. The LCD panel 17 simultaneously displays image strips of the right and left parallax images on a layer under the parallax barrier surface layer, image strips being arranged in an alternating fashion corresponding to the parallax barrier pattern such that the displayed images can be perceived as a stereoscopic image.

The structure of the display device allowing the stereoscopic display is not limited to the parallax barrier type using the slit array sheet, but other types may be applicable, such as lenticular type using a lenticular lens sheet, integral photography type using a micro lens array, and holography type utilizing the interference.

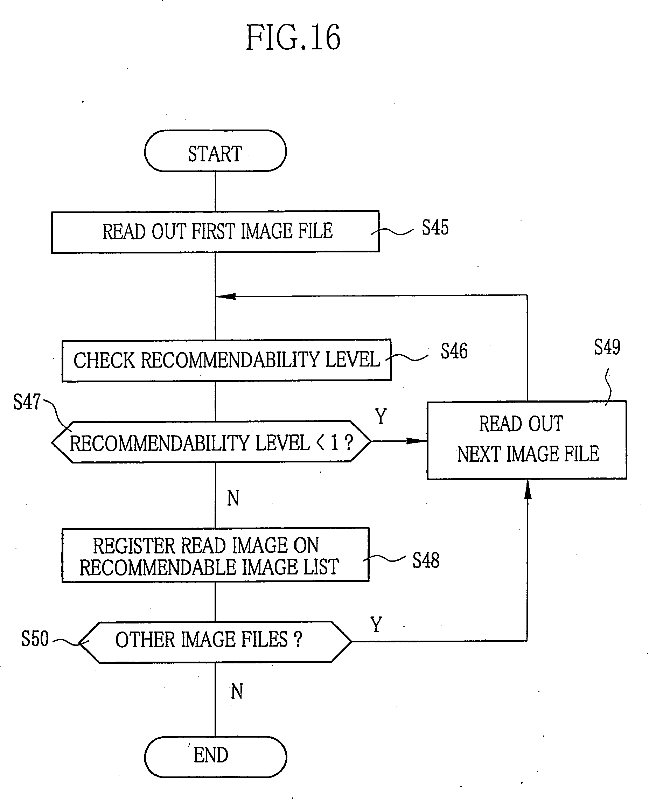

Now the operation of displaying 3D still images and 3D moving images on the digital photo frame 12 will be described with respect to a first embodiment. As shown in Fig. 16, the CPU 131 controls the memory controller 137 to read out the first 3D still image file 110 from the memory card 29 (S45). The CPU 131 checks the recommendability level of the read 3D still image file 110 (S46), to register the 3D still image file 110 on a list of recommendable images stored in the EEPROM 133 (S47, S48) when the recommendability level is 1 or more.

When the recommendability level of the 3D still image file is less than 1, the CPU 131 reads out the next 3D still image file 110 (S47, S49), to execute the steps S46 and S47. The CPU 131 repeats the steps S46 to S49 for all 3D still image files 110 written on the memory card 29 (S50).

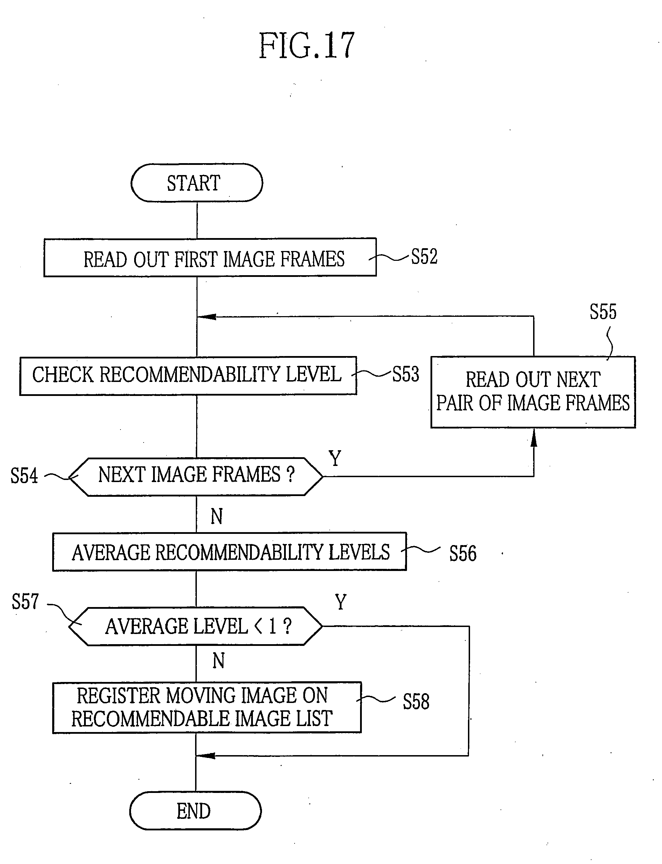

As for a 3D moving image file 115, the CPU 131 reads out the first pair of image frames (S52) and checks the recommendability level (S53), as shown in Fig. 17. When there is the next pair of image frames (S54), the CPU 131 reads out the next image frames and checks the recommendability level thereof (S55, S53). After reading all image frames of the 3D moving image file 115 and checking their recommendability levels, the CPU 131 averages the recommendability levels (S56), to register the 3D moving image file 115 on the list of recommendable images when the average is not less than 1 (S57, S58). Note that the CPU 131 checks the recommendability levels with respect to all 3D moving image files 115 written on the memory card 29.

After checking the recommendability levels of all 3D moving image files 115 written on the memory card 29, the CPU 131 reads the list of recommendable images from the EEPROM 133 (S60) and controls the LCD panel 17 to display an array of thumbnails of those image files registered on the recommendable image list (S61). Thus the CPU 131 enables selecting any thumbnails on the LCD panel 17 by manipulating the operating section 130 (S62), to display the 3D still image files 110 or the 3D moving image files 115 sequentially in correspondence with the selected thumbnails (S63).

Thus, only those stereoscopic images with recommendability levels of 1 or more, i.e. the intermediate and high recommendability levels, are displayed on the screen. Since the stereoscopic images with low recommendability levels are not displayed on the screen, the load on the observer's eyes is reduced. It may be preferable that the user can appropriately select the threshold level of recommendability for registering the images on the recommendable image list.

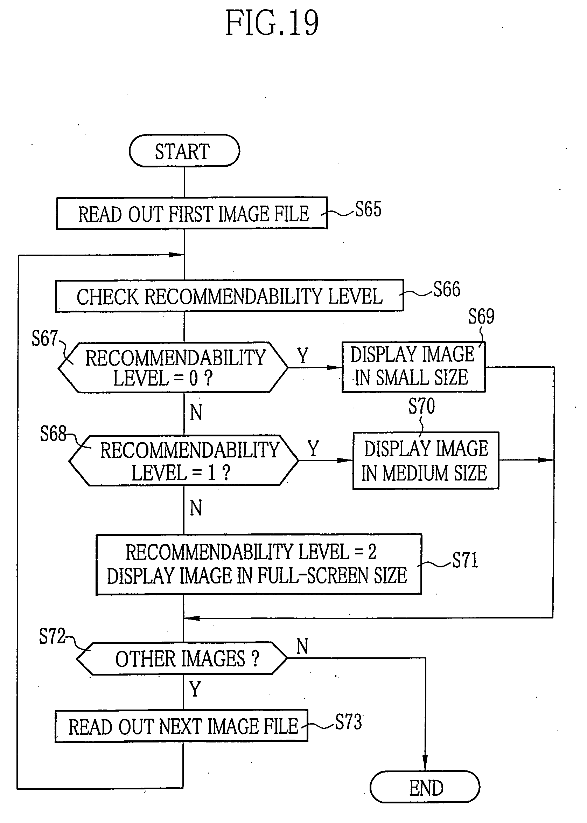

Next a second embodiment of displaying the stereoscopic images will be described, wherein all images are displayed in different sizes determined according to the recommendability levels. As shown in Fig. 19, CPU 131 reads out the first 3D still image file 110 from the memory card 29 (S65) and checks the recommendability level of the read 3D still image file 110 (S66 to S68).

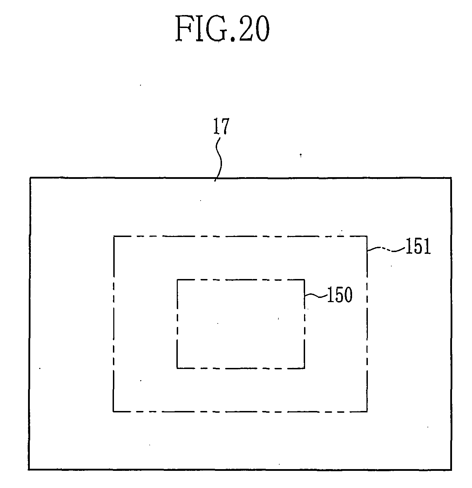

When the recommendability level of the 3D still image file 110 is "0", the CPU 131 controls the LCD panel 17 to display the stereoscopic image of the 3D still image file 110 in a small size 150, as shown in Fig. 20 (S67, S69). When the recommendability level of the 3D still image file 110 is "1", the CPU 131 controls the LCD panel 17 to display the stereoscopic image of the 3D still image file 110 in a middle size 151, as shown in Fig. 20 (S68, S70). Moreover, when the recommendability level of the 3D still image file 110 is "2", the CPU 131 controls the LCD panel 17 to display the stereoscopic image of the 3D still image file 110 in a full size of the screen, as shown by solid line in Fig. 20 (S71). The CPU 131 repeats the steps S66 to S71 with respect to all 3D still image files 110 written on the memory card 29 (S72, S73).

As for the 3D moving image files 115, the CPU 131 checks the recommendability levels of all image frames to change the display size according to an average of the recommendability levels.

According to this embodiment, those images with a lower recommendability level are displayed in a smaller size, which reduces the stress on the observer's eyes. On the other hand, since the images with a highest recommendability level are displayed in the full size, the observer can enjoy high-quality stereoscopic images in the largest size.

Although the display size changes depending on the recommendability levels in the second embodiment, it may be possible to change the time duration of displaying individual images according to their recommendability levels. In this example, the shortest display time duration is allocated to those images of the lowest recommendability level, and the longer display time duration is preferably allocated to the image of the higher recommendability level.

Next a third embodiment of reproducing the 3D moving image file 115 will be described. As a 3D moving image is represented by a plurality of parallax image frames displayed in continuous succession, if there are certain differences in parallax amount between these parallax image frames, the observer's eyes are urged to adjust the convergent distance to the different parallax amounts, which will put a heavier burden on the observer's eyes. To reduce the burden on the eyes, the present embodiment skips reproducing those image frames of lower recommendability levels, and continues to display a foregoing image frame instead of the skipped image frame.

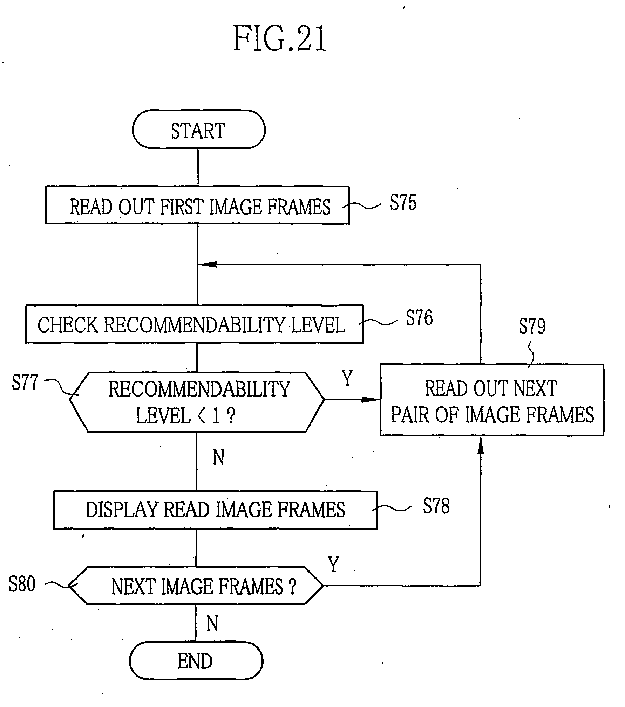

As shown in Fig. 21, on reproducing a 3D moving image file 115, CPU 131 reads out the first pair of image frames (S75) and checks the recommendability level of the read image frames (S76, S77). When the recommendability level is not less than 1, the CPU 131 controls the LCD panel 17 to display the read image frames (S78). When the recommendability level is less than 1, the CPU 131 reads out the next pair of image frames (S79) to execute the steps S76 and S77, without displaying the image frames of recommendability level of less than 1. In that case, the CPU 131 controls the LCD panel 17 to continue displaying the preceding image frame that has been displayed immediately before the image frames with recommendability level of less than 1. The CPU 131 performs the steps S76 to S78 with respect to all 3D moving image files 115 written on the memory card 29 (S80).

In the above embodiment, the decision as to whether an image frame should be displayed or not is made each time the image frame is read out. However, in another embodiment, the recommendability levels of all image frames of the 3D moving image file 115 may be checked first, and then the 3D moving image file 115 is edited on the basis of the checked recommendability levels, to produce a temporary moving image file served for reproduction only. Thus, even if a 3D moving image file 115 contains images frames of low recommendability levels in succession, the moving image is edited according to the content so as to lessen the load of the 3D moving image on the observer's eyes.

In all of the above embodiments, it is desirable that the user can optionally set up the contents for the stereoscopic display on the basis of the recommendability levels. To enable the optional setup of the display content, it is preferable that the user can check the distribution of the recommendability levels of all image files written on the memory card 29.

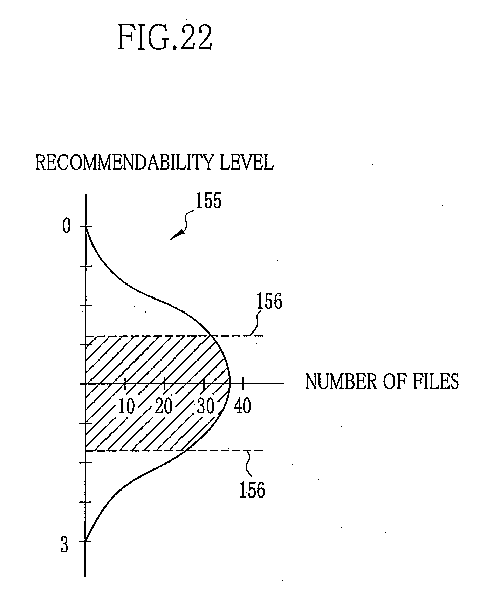

According to a fourth embodiment of the present invention, a graph showing a distribution curve of the recommendability levels of all image files written on the memory card 29 is displayed on the LCD panel 17 of the digital photo frame 12, as shown for example in Fig. 22. As the graph 155 plots the recommendability levels on its vertical axis, and the number of image files on its horizontal axis, the user can instantly see the correlation between the number of image files and the recommendability levels. Thus, the user can set up the display contents on the basis of the recommendability levels, while taking account of the correlation between the number of image files and the recommendability levels.

A couple of bars 156 or the'like may preferably be displayed on the graph 155 to limit the range of recommendability levels of the image files to be displayed. In that case, only those image files within the limited recommendability range are displayed. Where the display contents are designated by limiting the range of the recommendability levels using the bars 156 on the graph 155, it is possible to provide more scaling grades for finer evaluation of the recommendability or adequacy of the images for stereoscopic display. Providing an increased number of recommendability levels can complicate the recommendability evaluation process in the first to third embodiments where the display contents are designated on the basis of the recommendability levels. With the bars 156, however, it becomes possible to define the display contents while balancing the recommendability levels and the number of image files. Therefore, the increased number of recommendability levels will not disturb the operation.

Although the digital photo frame 12 has been described as a stereoscopic image outputting device of the present invention, the present invention is applicable to any kinds of monitors, televisions and the like insofar as they can display stereoscopic images. The present invention may also apply to a printer that produces stereoscopic photo prints with lenticular lenses. Moreover, the first to fourth embodiments, which have been described with respect to stereoscopic display on the digital photo frame 12, may also apply to the image display section 32 of the camera 11.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. A stereoscopic image recording apparatus comprising:
a parallax amount measuring device (100) that extracts corresponding points from a set of images (1 03L, 103R; 111L, 111 R) of an identical scene captured from different viewpoints to use for displaying a stereoscopic image,. detects a parallax amount ( P) between each set of the corresponding points, and takes statistics on frequency of occurrence of detected parallax amounts;
a stereoscopic adequacy evaluating device (101) that calculates from said statistics a cumulative frequency (Σ *Th*) of those parallax amounts which are not less than a threshold.value (Th), evaluates adequacy of said images for stereoscopic display on the basis of the cumulative frequency, and decides the level of recommendability of said images for stereoscopic display on the scale of at least two grades according to the evaluated adequacy; and
an image storing device (94) for storing said images in associated with recommendability information on the recommendability level decided by said stereoscopic adequacy evaluating device.

2. The stereoscopic image recording apparatus as recited in claim 1, wherein said stereoscopic adequacy evaluating device compares the calculated cumulative frequency with at least a cumulative frequency threshold level (Th1, Th2) to decide the recommendability level.

3. The stereoscopic image recording apparatus as recited in claim 2, wherein said stereoscopic adequacy evaluating device (101) decides the recommendability level to be a higher grade when the cumulative frequency is lower than the cumulative frequency threshold level, and decides the recommendability level to be a lower grade when the cumulative frequency is higher than the cumulative frequency threshold level.

4. The stereoscopic image recording apparatus as recited in claim 1, wherein when said images are image frames to be output in continuous succession to constitute a stereoscopic moving image, said parallax amount measuring device (100) detects the parallax amount and takes statistics on frequency of occurrence stereoscopic adequacy evaluating device decides the recommendability level of each set of said image frames.

5. The stereoscopic image recording apparatus as recited in claim 1, wherein said image storing device (94) stores said images and said recommendability information as an image file.

6. A stereoscopic image recording method comprising:
a parallax amount measuring step of:
extracting corresponding points from a set of images of an identical scene captured from different viewpoints to use for displaying a stereoscopic image;
detecting a parallax amount between each set of the corresponding points; and taking statistics on frequency of detected parallax amounts;
a stereoscopic adequacy evaluation step of:
calculating from said statistics a cumulative frequency of those parallax amounts which are not less than a threshold value;
evaluating adequacy of said images for stereoscopic display on the basis of the cumulative frequency; and
deciding the level of recommendability of said images for stereoscopic display on the scale of at least two grades according to the evaluated adequacy; and
an image storing step of storing said images with information on the recommendability level decided by said stereoscopic adequacy evaluating device.

7. A stereoscopic image outputting apparatus comprising:
an output device (17) for outputting a stereoscopic image using a set of images of an identical scene captured from different viewpoints; and
an output control device (131) that reads recommendability information representative of adequacy of said images for stereoscopic display, and changes output condition of said output device depending on the adequacy for stereoscopic display.

8. The stereoscopic image outputting apparatus as recited in claim 7, wherein said output control device decides on the basis of said recommendability information whether or not to output a stereoscopic image using said images, and controls said output device to output the stereoscopic image using said images when said output control device decides to output it.

9. The stereoscopic image outputting apparatus as recited in claim 7, wherein said output control device controls said output device on the basis of said recommendability information, to change the size or time duration for reproducing a stereoscopic image using said images.

10. The stereoscopic image outputting apparatus as recited in claim 7, wherein when said images are image frames to be output in continuous succession to constitute a stereoscopic moving image, said output control device decides whether or not to output said image frames of each set depending on said recommendability information attached to each set of said image frames, and when said output control device decides not to output a set of said image frames, said output control device controls said output device to continue outputting another set of image frames which have been output immediately before.

11. The stereoscopic image outputting apparatus as recited in claim 7, wherein each set of said images are stored along with said recommendability information in an image file, and said output control device reads out a plurality of said image files to display a graph showing the numbers of image files belonging to respective levels of adequacy for stereoscopic display as represented by said recommendability information.

12. A stereoscopic image outputting method comprising the steps of:
reading recommendability information representative of adequacy of a set of images of an identical scene captured from different viewpoints for use in displaying a stereoscopic image; and
changing output condition of a device for outputting a stereoscopic image using said images, depending on the adequacy of said images for stereoscopic display.

13. A stereoscopic image recording outputting system comprising:
a parallax amount measuring device that extracts corresponding points from a set of images of an identical scene captured from different viewpoints to use for displaying a stereoscopic image, detects a parallax amount between each set of the corresponding points, and takes statistics on frequency of occurrence of detected parallax amounts;
a stereoscopic adequacy evaluating device that calculates from said statistics a cumulative frequency of those parallax amounts which are not less than a threshold value, evaluates adequacy of said images for stereoscopic display on the basis of the cumulative frequency, and decides the level of recommendability of said images for stereoscopic display on the scale of at least two grades according to the evaluated adequacy;
an image storing device for storing said images associated with recommendability information on the recommendability level decided by said stereoscopic adequacy evaluating device;
an output device for outputting a stereoscopic image using a set of images of an identical scene captured from different viewpoints; and
an output control device that reads said recommendability information on said images as stored by said image storing device, and changes output condition of said output device depending on the adequacy of said images for stereoscopic display represented by said recommendability information.
